# EUROPEAN PATENT APPLICATION

(11) **EP 2 256 037 A1**
(43) Date of publication of application: **01.12.2010**
(21) Application number: 09160227.6
(22) Date of filing: 14.05.2009
(51) Int. Cl.: B64D 1/18, B64D 1/22, B64D 25/00

(54) **Fire fighting and rescue unit attachable to a helicopter**

(71) Applicant: Bin Abdul Aziz Al Saud, Naief Bin Mamdooh, P.O. Box 340025 11484 Al Riyadh (SA)
(72) Inventor: Bin Abdul Aziz Al Saud, Naief Bin Mamdooh, P.O. Box 340025 11484 Al Riyadh (SA)
(74) Representative: Viering, Jentschura & Partner

(57) **Abstract**

The current invention involves providing aircraft firefighting and rescue services through aircraft (1) with mobile unit bearing extensions consisted of two chambers attached together through a base (2) combined together through the external craft body (3), this will accommodate a great number of injured persons required to be helped and transported by air. The craft shall be provided with 2 firefighting guns (4), these two firefighting guns will be fixed on front and on the rear of the craft; their movement shall be vertically and horizontally with an angle of 180°. The invented unit shall be equipped with 2 firefighting guns (5). They may be used where necessary; firefighting and rescue unit will be lowered and raised through elastic bearer extensions associated with an electrical lift fixed on the a mobile base on metal track (6). The rescuer / craft leader assistant will control equipment from inside the craft where the firefighting and rescue unit will move safely towards the target easily and simply vertically and horizontally in a way realizing the stability of the craft in the air without moving it towards the target; this will raise the level of security of the craft and the firefighting and rescue unit.

## Description

### A. Background

### 1. Field of the invention

This invention pertains to an Aircraft Firefighting and Rescue Unit used in firefighting and rescue operations in general and especially in high buildings. This is an addition to ships firefighting through self-provision of extinguishing material involving the protection elements through sea water. This will be fixed on all helicopters existing in the service now or the new ones, it will have the capacity to accommodate as much as injured persons to be rescued.

### 2. Background of the invention

This invention is in the field of firefighting aircraft, as the current aircraft have small tanks and mostly rely on water carried in buckets from distant areas and poured onto the fire, or water containers on land. Firefighters also use ladders to climb up to buildings. Yet, when there is a fire in a place too high for ladders to reach or too narrow for engines to get to, or so far away that it takes too long to get there, it becomes difficult to make the best use of aircraft, thus causing many casualties and losses.

There are many systems and methods to extinguish fires and rescue injured persons; this is in addition to providing first aid to those who require them through different method as; ambulances, fleets landing near the target where it is possible practically and safely, land ambulance services to secure the injured persons which take a longer time form air rescue because of roads obstacles between the starting station and the and the accident location as well as returning back to hospitals. This operation will take time to perform first aid and rescue. This is similar to helicopters which required a special location and big area to land near the target. Practically, there are not capable helicopters to work safely providing ambulance services for more than one person in the same time. For instance, previous inventions involved a followed method including stopping the helicopters in the air and one rescuer dropped to the accident location on the land; he can rescue one or two persons. For example, there are no helicopters to perform ambulance work in addition to firefighting operations.

This current invention which will be described as firefighting and rescuing system providing firefighting and rescuing services or both together, in addition to high level of accuracy and safety during performance of such required task, especially during rescue operations of high residence towers.

### B. Summary of the New Invention

This invention involves a Firefighting Aircraft and a selected Rescue Unit on board (hereinafter "The Aircraft Invention") for firefighting only, rescue only or firefighting and rescue in the same time. This invention will be used to rescue injured persons subject to accidents whether they are on the earth, especially in the narrow roads and places where helicopters cannot land or the handicapped in the upper floors of the affected buildings especially those very high buildings; so that to transfer them to the safe places or hospitals.

The above mentioned task includes a main goal of such invention involving a design and manufacturing a Firefighting and Rescue Unit capable to accommodate a greater number of injured persons required to be rescued and transferred by air. This unit will be controlled and directed towards the target safely through photographing units and sensors fixed on the front of the firefighting and rescue Aircraft Invention. The operation will be carried out through an electricallift fixed on a base (movable on a metal track) inside the craft associated with bearing extensions designed for this purpose and manufactured from anti fire (combustion resistant) materials, The rescuer/craft leader assistant will control equipment from inside the craft where the firefighting and rescue unit will move safely towards the target easily and simply vertically and horizontally in a way realizing the stability of the craft in the air without moving it towards the target; this will raise the level of security of the craft and the firefighting and rescue crew to face obstacles as strong wind for example.

The extinguishing fire guns fixed on both sides of this invention as well as two other guns! Moving in an angle of 145' vertically and horizontally, in the front and rear of the craft; will work to extinguish the fire and cool the accident area where such extinguishing equipments will provide extinguishing material through a pipe attached to tank in the inside craft floor joined to parts of said front and rear panels adjacent said outer seam.

Considering the losses in lives and properties caused by fires that could start in very high, uncomfortably tight or very distant places, this invention has provided the answers to these problems, as it is supplied with an aircraft long lower tank and as high as allowed by the technical specifications of each aircraft; carrying fire extinguishing material - be it water or foam - with an attached hose capable of reaching the fire no matter how high, through a lower cabin carrying the firefighters and the paramedics who have access to the fire no matter how high. It can also enable access to narrow places inaccessible to fire engines. In addition, these aircraft can carry out firefighting, rescue and first aid missions in the distant areas that take too long for cards to get to.

Features of the invention include attachments not included in the earlier firefighting aircrafts.
1) The lower tank proportional to the size of the aircraft, or according to the technical specifications of each aircraft.
2) The hose hanging from, and directly attached to, the tank, to get on with the firefighting process.
3) The cabin extended and lowered from the aircraft carrying firefighters and rescuers.
4) Strong ropes holding the cabin.
5) The cabin's staircase to assist in firefighting and rescuing.
6) The aircraft's ability to carry out firefighting, rescue and first aid missions under the most difficult circumstances on very high places, in very tight places, in very critical circumstances, in remote locations if necessary.

It is also worth mentioning, that the shape, look and function of this aircraft, and how to operate and use it, is clear to the specialists in this field. It should also be noted that anything similar to what has been illustrated in figures and words was intended to be viewed as part of this invention.

### C. BRIEF DESCRIPTION OF THE DRAWINGS

This invention specifications and features will be clearer through the description of this invention idea related to Aircraft Firefighting and Rescue Unit illustrated in the attached drawings as follows:

Fig. 1 is a bottom perspective view of the new invention incorporated into a helicopter.

Fig. 2 is an end elevation view of mobile firefighting and rescue unit not descended from a helicopter.

Fig. 3 is an end elevation view similar to Fig. 2, with the dual cabin units lowered by cables below the aircraft.

Fig. 4 is an end perspective view of the dual cabins of the Rescue Unit apart from the helicopter.

Fig. 5 is a side elevation view of the Rescue Unit lowered from a helicopter into a space between two buildings.

Fig. 6 is a side elevation view similar to Fig. 5 with the Rescue Unit situated closely adjacent one of the buildings.

Fig. 7 is a bottom perspective view of the Rescue Unit seen in Fig. 2

Fig. 8 corresponds to Fig. 3.

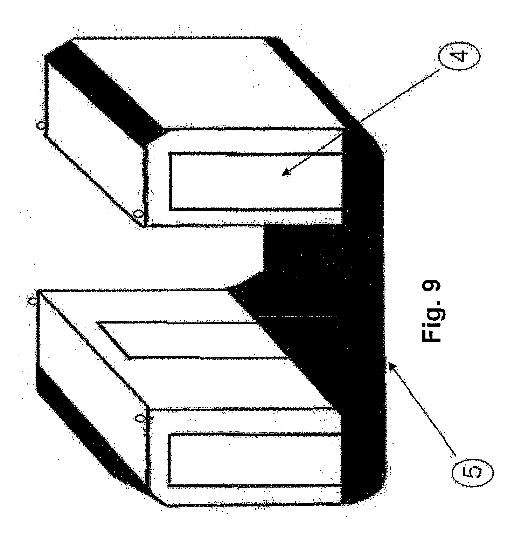

Fig. 9 corresponds to Fig. 4.

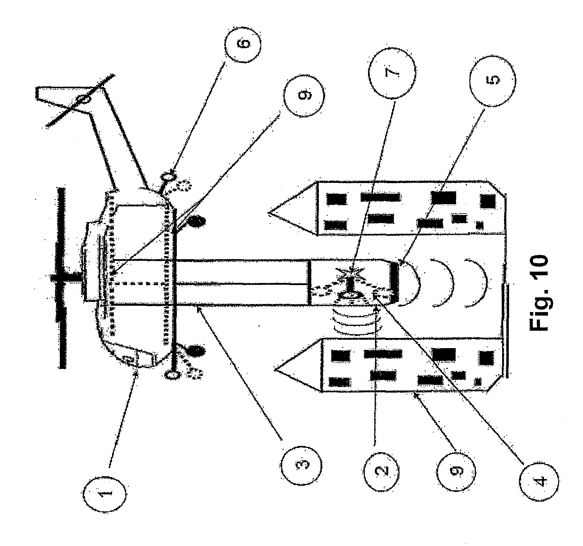

Fig. 10 corresponds to Fig. 5.

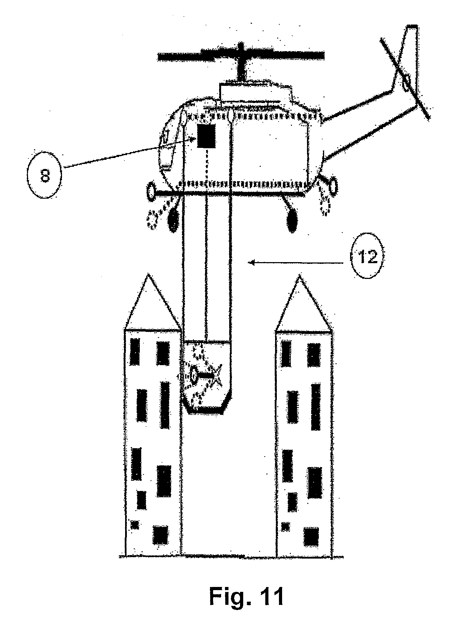

Fig. 11 corresponds to Fig. 6.

### D. DETAILED DESCRIPTION OF THE PREFERRED EMBODIMENT

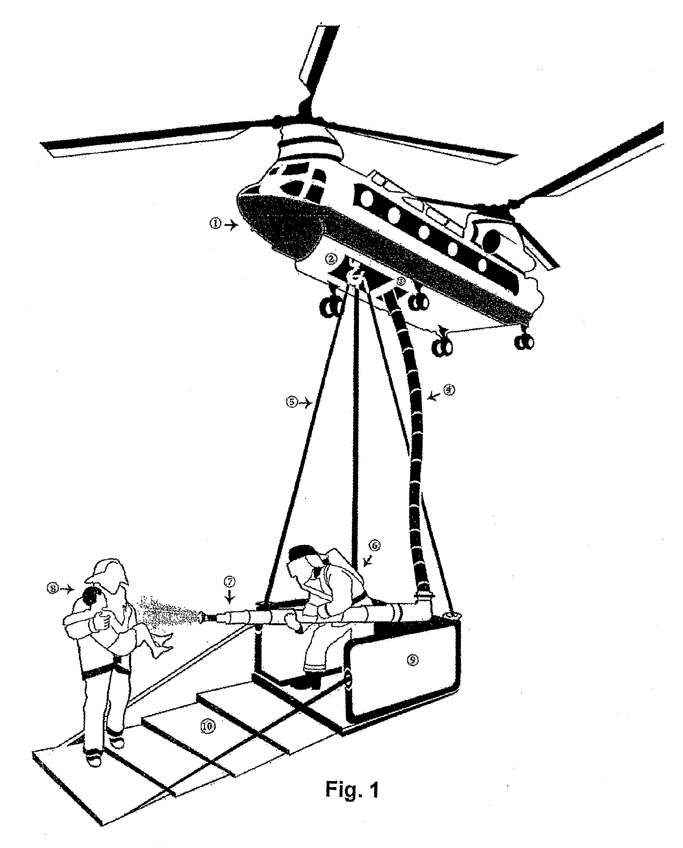

Fig. 1 shows an aircraft has a huge tank enabling it to carry as much firefighting materials as possible (foam, water, etc.). Moreover, these aircrafts come with a state-of-the-art fire resistant cabin carrying firefighters and rescuers and the hose, with an attached staircase to give firefighters and rescuers access to the place on fire in order to fight the fire and rescue those who are trapped by fire, bring them out and treat them. These equipment help the aircraft perform all sorts of firefighting, rescue and first aid missions at almost any height without ground help. These aircrafts can extinguish fires on very high floors such as the fortieth, and fly through two towers of the same building where there is no room for fire engines. Such aircraft can also reach its destination quickly, overcoming traffic jams, and save as many lives and properties as possible.

### Description of Figure 1

Ref. No. 1 shows main water and foam tank.
Ref. No.2 shows the firefighting cabin's exit below the aircraft.
Ref. No.3 shows the foam hose exit below the aircraft.
Ref. No. 4 shows the foam hose
Ref. No.5 shows the cables holding the firefighting cabin.
Ref. No.6 shows a firefighter holding the foam hose
Ref. No. 7 shows the foam's outlet.
Ref. NO.8 shows a firefighter standing on the cabinet's stairs.
Ref. No.9 shows main firefighting cabin.
Ref. No. 10 shows cabin's stairs to assist in rescue missions.

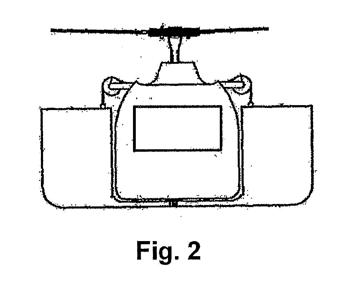

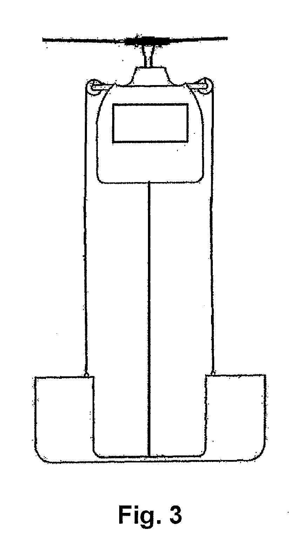

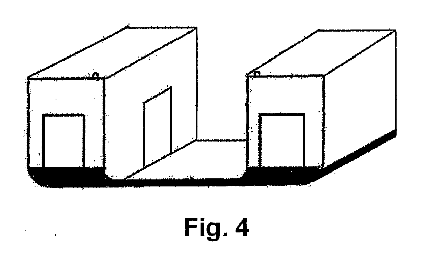

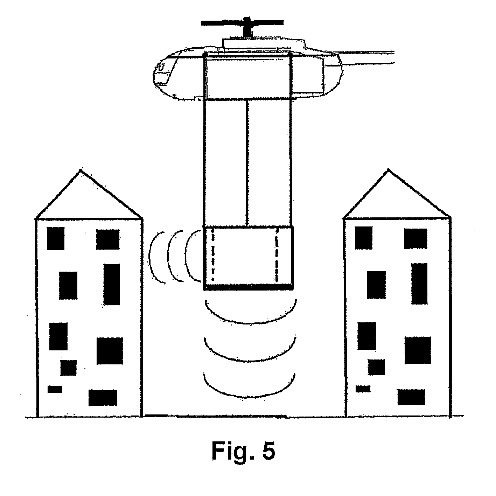

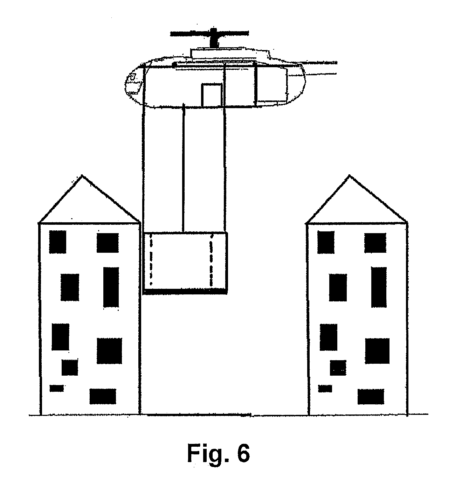

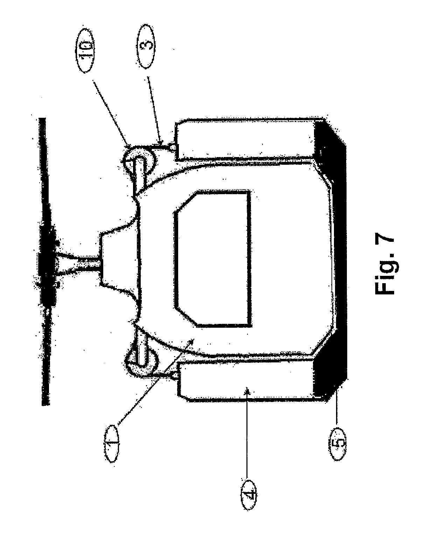

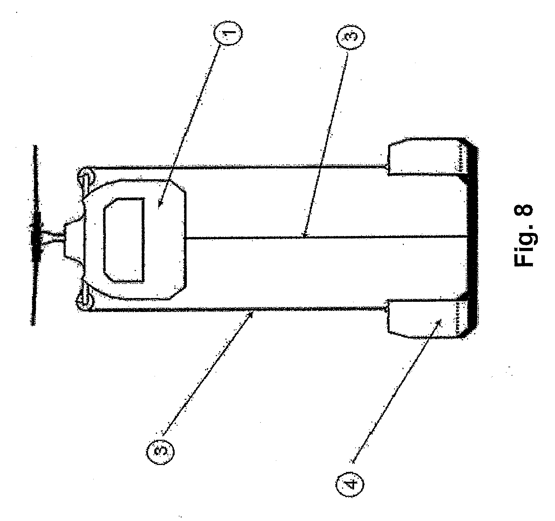

The Air Firefighting and Rescue Unit as per the invention is illustrated in Figs. 1-8. Fig. 2 shows mobile chambers (1), each chamber is in one side of the craft from outside; the 2 chambers are associated with floor base (3). They are associated with internal connection extensions (4). Associated with electrical lift (5) fixed inside the craft on a metal track (6). The electrical lift moves vertically to support Firefighting and Rescue Unit to join safely with the accident site wall. Also the two chambers associated with the craft roof through trolleys fixed on the outside roof of the craft (7); so that to be a balance between both chambers during carrying out the required task. In the front and rear of the craft there will be fixed units (8); they will work to allow flow of air on both sides of the aircraft when flying; in the same time they are used a fixed chambers to receive additional number of injured persons to be rescued. The chambers will be fixed during manufactured new crafts; they may be fixed on old crafts.

The Firefighting and Rescue Unit will be lowered and raised through elastic bearer (9) between the invented unit from one side and the electrical Jift from the other side (5) fixed inside the craft from another side. Also the outside roof of the two chambers composing the invented unit are associated with elastic bearer extensions (9) through special trolleys (10) designed for this purpose and fixed on both side of the craft roof so that to keep the balance of both chambers during lowering Firefighting and Rescue Unit.

Firefighting and Rescue Unit subject to this invention will be provided with extinguishing equipments (11) which connect both chambers so that to use the invented unit in extinguishing the fires.

The Firefighting and Rescue Unit is associated with day / night photo units operated by infra red rays (12) fixed in specified places on the invented unit as per each design of the invention so that to suit the mode of each type of different crafts where to fix the invention on. Photo units will be associated with special screen inside the chamber of the unit subject to this invention in addition to a screen inside the craft to clarify the Firefighting and Rescue Unit situation for craft leader /his assistant to help where necessary to enable the rescuer to lower Firefighting and Rescue Unit to the target easily and simply without any accident. To clarify this more, it is possible to use any suitable equipment of photo sensors of such purpose including visual sensors (using visual or infra red rays) or thermal photo sensor equipment, radar sensor equipment/ audio photo sensor equipment, the operator (rescuer pilot aSSistant) of the unit will observe the image formed through sensor equipment on a display unit provided in the control unit. The target location will appear on the image using suitable affecting means. The control unit may catch the target automatically depending on the programmed information as anther option. The persons on the land may define landing site through using laser means, for example other marker as an option or addition. The sensor equipment may include extent object or separated extent object related to Firefighting and Rescue Unit so that to define the distance of the target. However, as an introduction to approaching the targetr the control unit will discover the target and track it using technical methods to process the photo and signals known in this field where the control unit will search the site and provide direction accordingly. The control unit may direct the unit to the target and the controller's role will be simple with little effort.

The Firefighting and Rescue Unit is equipped with sensors system (13); so that to identify the distance of the Firefighting and Rescue Unit from the target to reach to; these sensors may be used to identify the weight of each chamber and the weight of total load of the unit.

Depending on the previous description, it is clear that this invention will realize the purposeful goal.

It should be clear that providing the existing crafts with the Aircraft Firefighting and Rescue Unit subject of this invention conforming to any kind o( the different crafts.

This invention is subject to have a number of embodiments involving the invention idea, this is in addition to all special elements which may be replaced with other similar technical elements.

In executing this invention, it will possible to choose the suitable materials and sizes meeting the requirements of each kinds of crafts provided that they conform to the purposeful use.

It is possible to use the Firefighting and Rescue Unit through other shapes, volumes and configurations through the above mentioned description within the framework of this current invention; so it is preferred to mention the previous features, for example. Also, the current invention is not specified in the above context, accordingly, instead of this the current invention will include all main and branch images of the different features described in the above context; this is in addition to the differences and amendments which may take place by the experienced persons in the filed of design and execution after reading the previous description.

A preferred embodiment of the Aircraft Firefighting and Rescue Unit will contain fixed I mobile ambulance components consisting of:
1- Chambers opposite each other on both sides of the craft composing one unit associated together with the base.
2- The Aircraft Firefighting and Rescue Unit created conforming to protection elements No.(1) which may be fixed on (2) all kinds of existing helicopters of the new ones.
3- The Aircraft Firefighting and Rescue Unit conforming to protection element No (1) will be able to perform firefighting and rescuing tasks (2) in the same time.
4- The Aircraft Firefighting and Rescue Unit conforming to protection element No (1) will be able to perform sea firefighting and rescuing tasks.
5- The Aircraft Firefighting and Rescue Unit conforming to protection element No (1) will be able to perform firefighting and rescuing tasks will be in the plane shape.
6- The craft including the created unit will contain an electrical lift fixed on a longitude metal track (2) fixed on the roof of the craft from inside through which the Firefighting and Rescue Unit will be lowered and raised.
7- The Firefighting and Rescue Unit conforming to protection element No (1) will help in its design to have (2) independent rescuers so that to speed Firefighting and Rescue operations.
8- The Firefighting and Rescue Unit conforming to protection element No (1) will have elastic bearer extensions associated with the (2) created unit inside and outside the craft.
9- The Firefighting and Rescue Unit conforming to protection element No (2) will have two extinguishing guns (2) fixed on the both sides of the two chambers having extinguishing material from a tank within the (3) craft inside floor.
10- The craft equipped with Firefighting and Rescue Unit conforming to protection element No.(1) will have two extinguishing guns (2) in the front and rear of the craft; they are able to move within an angle of 180 vertically and horizontally to help (3) firefighting and cooling the accident area.
11- The Firefighting and Rescue Unit conforming to protection element No (1) will have photo units (2) so that to identify' the target accurately together with recording firefighting and rescuing operation completely for review and study in the future.
12- The Firefighting and Rescue Unit conforming to protection element No (1) will have sensors fixed on (2) the base and body of the created unit, inside its parts and inside the craft.
13- The Firefighting and Rescue Unit conforming to protection element No, (9) where the bearing extension are associated with sensors (2) to measure tension level of all bearing extensions.
14- The Firefighting and Rescue Unit conforming to protection element No (9) where it includes speed measuring tool (2) so that to measure the raising and lowering average of the created unit.
15- The Firefighting and Rescue Unit conforming to protection element No (9) will include speed measuring tool (2) so that to measure the raising and lowering average of the Firefighting and Rescue Unit.
16- The Firefighting and Rescue Unit conforming to protection element No (8) where photo units will be fixed on (2) the craft body from below.
17- The Firefighting and Rescue Unit conforming to protection element No (8) where the photo units (2) may include radar sensor equipment.
18- The Firefighting and Rescue Unit conforming to protection element No (8) where the photo units (2) may include visual sensor equipment.
19- The Firefighting and Rescue Unit conforming to protection element No (9) where the created unit will include automatic sensor equipment helping to read the distance between the created unit and the wall of the building on fire (3) or the floor of the accident site.
20- The Firefighting and Rescue Unit conforming to protection element No (9) will include automatic sensor fixed on (2) the craft where the control unit will work to discover changes in the (first) reading provided with (3) the first automatic sensor compared with a (second) reading provided by the second automatic sensor (4) fixed on the Firefighting and Rescue Unit to process changes discovered so that to measure the (5) movement of the Firefighting and Rescue Unit compared to that of the craft.
21- The Firefighting and Rescue Unit conforming to protection element No (9) to check the distance between (2) Firefighting and Rescue Unit and the an object nearby the unit.
22- The Firefighting and Rescue Unit conforming to protection element No (19) where the created unit will be able make the (2) craft crew liaise with the medical operation room on land.

While the invention has been described in conjunction with several embodiments, it is to be understood that many alternatives, modifications, and variations will be apparent to those skilled in the art in light of the foregoing description. Accordingly, this invention is intended to embrace all such alternatives, modifications, and variations which fall within the spirit and scope of the appended claims.

## Claims

1. An improved firefighting apparatus operable with a helicopter aircraft, comprising:
a. a storage tank mountable on said aircraft and adapted to carry water or flame-retardant foam
b. a cabin with support cables and motor means for lowering said cabin by said cables from said aircraft,
c. a hose extendible from said storage tank downward to said cabin for use by a firefighter to direct said water or foam, and
d. said cabin having at least one sideward extending portal for transfer of firefighters and victims off of or into said cabin.

2. An apparatus according to claim 1 where said cabin comprises a pair of spaced apart cabin units adapted to be situated on opposite sides of said helicopter with a base element extending below said aircraft and between and fixed to said cabin units.

3. An apparatus according to claim 2 where said support cables extend from pulleys situated near the top of said aircraft, said cables being attached respectively to said cabin units.

4. An apparatus according to claim 1 wherein said hose has a distal end situated in said cabin and a nozzle on said distal end directable by a firefighter.

5. An apparatus according to claim 1 wherein said cabin further comprises a staircase extendible generally horizontally from said cabin.

6. An apparatus according to claim 1 further comprising sensors on said cabin for sensing heat and proximity of said cabin to buildings and fires.
